# EUROPÄISCHE PATENTSCHRIFT

(11) **EP 3 075 224 B1**
(45) Veröffentlichungstag und Bekanntmachung des Hinweises auf die Patenterteilung: **18.12.2019**
(21) Anmeldenummer: 16152061.4
(22) Anmeldetag: 20.01.2016
(51) Int. Cl.: A01D 41/127, G05B 13/02, G05B 17/02

(54) **MÄHDRESCHER**
COMBINE HARVESTER
MOISSONNEUSE-BATTEUSE

(30) Priorität: 02.04.2015 DE 102015004344
(43) Veröffentlichungstag der Anmeldung: 05.10.2016
(73) Patentinhaber: CLAAS Selbstfahrende Erntemaschinen GmbH, 33428 Harsewinkel (DE)
(72) Erfinder: Heitmann, Christoph, 48231 Warendorf (DE); Wilken, Andreas, 49143 Bissendorf (DE); Baumgarten, Joachim, 48361 Beelen (DE); Neu, Sebastian, 49196 Bad Laer (DE); Bussmann, Christoph, 33428 Harsewinkel (DE); Vöcking, Henner, 33397 Rietberg (DE); Terörde, Stefan, 48231 Warendorf (DE); Vieregge, Christopher, 32694 Dörentrup (DE)
(74) Vertreter: CLAAS Gruppe

(56) Entgegenhaltungen:
- EP-A1- 1 543 712
- EP-A1- 1 902 609
- EP-A1- 2 728 523
- EP-A2- 2 687 924
- EP-A2- 2 837 279
- DE-A1-102009 009 767

## Beschreibung

Die Erfindung betrifft einen Mähdrescher mit den Merkmalen des Oberbegriffs von Anspruch 1.

Mähdrescher dienen der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Getreidetank zugeführt wird. Als weitere Bestandteile des Ernteguts bleiben weiter z. B. die Spreu und das Stroh übrig, welche entweder über das Feld verteilt oder - im Falle des Strohs - auf Schwad z.B. zur späteren Aufnahme durch eine Ballenpresse gelegt werden können. Hier und nachfolgend ist unter dem Begriff Erntegut der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutstrom getrennt, sodass es direkt der Reinigung zugeführt werden kann. Der übriggebliebene Erntegutstrom wird dann dem Abscheidebereich zugeführt, in welchem z.B. durch eine Schüttleranordnung das verbliebene Korn von dem Erntegutstrom getrennt und danach ebenfalls der Reinigung zugeführt wird.

Es gibt nun eine ganze Reihe von Kriterien, anhand derer die Güte des Dreschvorgangs beurteilt werden kann. Erstens sollen möglichst alle Körner aus dem Erntegutstrom entfernt und dem Korntank zugeführt werden, und zwar mit möglichst wenig gebrochenen Körnern - Bruchkörnern - und einem geringen Nichtkornanteil im Korngut. Zweitens soll ggf. auch das Stroh nicht so stark zerstört und z.B. zerschnitten werden, dass die spätere Verwertung erschwert wird. Drittens soll die für die Bearbeitung eines Feldes benötigte Zeit kurz und der dabei verbrauchte Kraftstoff möglichst gering gehalten werden. Weitere Gütekriterien sind hier denkbar. In Abhängigkeit von der Gesamtsituation, insbesondere von den jeweiligen wirtschaftlichen Rahmenbedingen, stehen unterschiedliche Gütekriterien im Vordergrund, die sich zu einer Ernteprozeßstrategie für die Durchführung des Ernteprozesses zusammensetzen.

Das Erfüllen der obigen Gütekriterien setzt voraus, dass das Dreschwerk auf bestimmte Art und Weise angesteuert wird, wobei diese Art und Weise nicht nur von den speziellen Gütekriterien, sondern auch von verschiedenen Bedingungen der Umgebung, des Mähdreschers und insbesondere des Dreschwerks selbst sowie der Beschaffenheit und Zusammensetzung des Ernteguts abhängt. Dabei bedeutet die Priorisierung des einen Gütekriteriums regelmäßig einen Nachteil für ein anderes Gütekriterium.

Aus dem Stand der Technik und speziell aus der EP 1 731 017 B2 ist es bekannt, in einer Steuervorrichtung einen speziellen Steuerungsprozess für die Optimierung des Dreschwerks - den Dreschwerksoptimierungsprozess - vorzusehen. Wenn dieser Steuerungsprozess aktiviert wird, setzt er am Dreschwerk "optimale" Dreschwerkeinstellungen und schaltet sich dann ab. Dabei läuft dieser Dreschwerksoptimierungsprozess stets gleich und insbesondere mit den gleichen Einstellungen ab. Das Aktivieren des Dreschwerksoptimierungsprozesses schaltet ferner einen ggf. aktuell ablaufenden Regelungsprozess für die Fahrgeschwindigkeit des Mähdreschers ab, sodass dieser nicht gleichzeitig ablaufen kann.

Aus der DE 10 2009 009 767 A1, von welcher die vorliegende Erfindung ausgeht, ist darüber hinaus ein Mähdrescher mit einem Fahrerassistenzsystem bekannt, welches Fahrerassistenzsystem verschiedene Größen (z.B. Drehzahl, Korbweite, Kornverluste) an dem Mähdrescher misst und sie daraufhin überprüft, ob sie in einen kritischen Wertebereich gelangen bzw. kritische Grenzwerte über- oder unterschreiten. Falls diese Situation eintritt, kommuniziert das Fahrerassistenzsystem interaktiv mit dem Fahrer, indem dem Fahrer Maßnahmen bei der Ansteuerung des Dreschwerks vorgeschlagen werden, die aus dem kritischen Wertebereich hinausführen sollen. Diese Vorschläge kann der Fahrer dann akzeptieren oder verwerfen, wobei in einem nächsten Schritt ggf. dem Fahrer alternative Vorschläge gemacht werden oder die vorgeschlagenen Maßnahmen von dem Fahrer durch eine Eingabe genauer spezifiziert werden können.

Nachteilig an diesem Stand der Technik ist, dass das Fahrerassistenzsystem die obigen Maßnahmen aufbauend auf einer Datenbasis mit dort abgelegtem Expertenwissen ermittelt. Ein solches Expertensystem ist stets mit hohem Hardware- und Verwaltungsaufwand verbunden. Zudem ist es gemäß der EP 2 687 924 A2 aus dem Stand der Technik bekannt Kennlinienfelder zur Beschreibung von Funktionsbereichen landwirtschaftlicher Erntemaschinen heranzuziehen, wobei derartige Kennlinienfelder wegen ihrer generellen Struktur nur eingeschränkt geeignet sind spezielle Zusammenhänge von Parametern einer landwirtschaftlichen Erntemaschine wiederzugeben.

Ausgehend von diesem Stand der Technik besteht die Aufgabe der Erfindung darin, den aus dem Stand der Technik bekannten Mähdrescher mit Fahrerassistenzsystem so weiterzuentwickeln und zu verbessern, dass mit geringem Aufwand eine umfassende und vorteilhafte Ansteuerung des Dreschwerks bei geringerer Beanspruchung des Fahrers möglich ist.

Das obige Problem wird bei einem Mähdrescher mit den Merkmalen des Oberbegriffs von Anspruch 1 durch die Merkmale des kennzeichnenden Teils von Anspruch 1 gelöst.

Wesentlich ist zunächst, dass in dem Speicher des Fahrerassistenzsystems ein funktionales Systemmodell für zumindest einen Teil des Mähdreschers hinterlegt ist, das die Basis für die autonome Ermittlung des mindestens einen Dreschwerksparameters bildet. Der Begriff "funktionales Systemmodell" bedeutet, dass zumindest ein Teil der funktionalen Zusammenhänge innerhalb des Mähdreschers von dem Systemmodell abgebildet werden. Beispiele hierfür werden weiter unten gegeben.

Zur Abbildung der funktionalen Zusammenhänge mittels des Systemmodells ist es vorgesehen, dass mindestens einem Ernteprozessparameter mindestens ein Kennlinienfeld zugeordnet ist, wobei der Ernteprozessparameter die Ausgangsgröße des jeweiligen Kennlinienfeldes ist. Mittels eines obigen Kennlinienfeldes lassen sich auch komplexe funktionale Zusammenhänge mit geringem rechnerischen Aufwand abbilden.

Ein obiges Kennlinienfeld bildet hier und vorzugsweise ganz allgemein die Abhängigkeit einer Ausgangsgröße von mindestens einer Eingangsgröße, insbesondere von zwei oder mehreren Eingangsgrößen, ab.

Vorzugsweise ist es so, dass die Rechenvorrichtung das Systemmodell im laufenden Erntebetrieb auf den aktuellen Ernteprozesszustand abgleicht. Die Überlegung besteht hier darin, das der autonomen Ermittlung der Dreschwerksparameter zugrundeliegende Systemmodell insbesondere zyklisch auf die tatsächlichen Gegebenheiten anzupassen.

Das Dreschwerk bildet zusammen mit dem Fahrerassistenzsystem einen Dreschautomaten. Dies bedeutet, dass das Fahrerassistenzsystem mit seinem Speicher zum Hinterlegen von Daten und seiner Rechenvorrichtung dazu eingerichtet ist, einzelne Maschinenparameter des Dreschwerks autonom zu ermitteln und dem Dreschwerk vorzugeben. Solche Maschinenparameter werden vorliegend als "Dreschwerksparameter" bezeichnet. Die Basis für die Ermittlung der Dreschwerksparameter bildet eine benutzerseitige Auswahl von Ernteprozeßstrategien, die in dem Speicher des Fahrerassistenzsystems abgelegt sind. Damit kann durch eine einmalige Auswahl der aktiven Ernteprozeßstrategie durch den Fahrer eine Art und Weise der Ansteuerung des Dreschwerks vorgegeben werden. Für die Ermittlung der Dreschwerksparameter im engeren Sinne ist eine weitere Eingabe vom Fahrer nicht erforderlich. Der Fahrer hat aber die Möglichkeit, die gewählte Ernteprozeßstrategie auf Wunsch zu ändern, so dass daraufhin weiter eine autonome Ansteuerung stattfindet, jedoch dann ggf. mit einer anderen Priorisierung.

Vorzugsweise ist eine zyklische Ermittlung von Dreschwerksparametern während des Erntebetriebs vorgesehen. Der Begriff "zyklisch" ist dabei weit zu verstehen und bedeutet hier eine fortlaufende Ermittlung mit konstanter, aber auch mit sich verändernder Zykluszeit. Eine solche zyklische Ermittlung des mindestens einen Dreschwerksparameters führt zu einer guten Reaktionszeit des Mähdreschers auf Änderungen im Ernteprozesszustand. Entsprechend ist es in diesem Zusammenhang vorteilhaft, auch das Systemmodell zyklisch auf den aktuellen Ernteprozesszustand abzugleichen. Die Zykluszeiten sind hinreichend kurz einzustellen, um eine oben angesprochene, vorteilhafte Reaktionszeit zu erzielen.

Vorzugsweise gleicht die Rechenvorrichtung das Systemmodell in einem rekursiven Verfahren auf den jeweils aktuellen Ernteprozesszustand ab, so dass sich das Systemmodell schrittweise an die tatsächlichen Gegebenheiten annähert.

Unter dem Ernteprozesszustand sind alle Zustandsgrößen zusammengefasst, die in irgendeiner Weise mit dem Ernteprozess im Zusammenhang stehen. Dazu gehören Feldbestandsinformationen und/oder Ernteprozessparameter und/oder Dreschwerksparameter und/oder Umgebungsinformationen (Anspruch 2).

Bei einer besonders bevorzugten Ausgestaltung ist eine Sensoranordnung zur Erfassung zumindest eines Teils des Ernteprozesszustands vorgesehen. Damit lässt sich insbesondere der oben angesprochene, zyklische Abgleich des Systemmodells besonders einfach umsetzen. Bei anderen bevorzugten Ausgestaltungen lässt sich zumindest ein Teil des Ernteprozesszustands über eine Ein-/Ausgabevorrichtung eingeben. Damit lassen sich Sensorinformationen verifizieren oder sensorisch schwer erfassbare Zustandsgrößen ermitteln.

Weiter vorzugsweise ist in dem Speicher des Fahrerassistenzsystems mindestens ein Initialmodell hinterlegt, das insbesondere bei dem oben angesprochenen, fortlaufenden Abgleich des Systemmodels als Anfangswert dienen kann. Bei geeigneter Auswahl des Initialmodells lässt sich das Systemmodell in nur wenigen Abgleichzyklen auf eine gute Übereinstimmung mit den tatsächlichen Gegebenheiten bringen.

Gemäß den Ansprüchen 4 und 5 ist eine ganz besondere Strukturierung des mindestens einen Kennlinienfelds vorgesehen, die der Tatsache Rechnung trägt, dass die Dreschwerksparameter "Trommeldrehzahl" und "Korbweite" von besonderer Bedeutung für die Umsetzung der obigen Ernteprozeßstrategien sind.

Im Sinne des oben angesprochenen Abgleichs des Systemmodells mit dem tatsächlichen Ernteprozesszustand ist es gemäß Anspruch 11 vorgesehen, dass die Rechenvorrichtung das mindestens eine Kennlinienfeld im laufenden Erntebetrieb, vorzugsweise zyklisch, auf den tatsächlichen Ernteprozesszustand abgleicht. Für die Umsetzung eines solchen Abgleichs ist es vorzugsweise vorgesehen, dass mehrere Punkte innerhalb des Kennlinienfeldes mittels einer Sensoranordnung nachgemessen werden. Eine Abweichung der gemessenen Punkte von den dazugehörigen Punkten des Systemmodells führt zu einer entsprechenden Anpassung des mindestens einen Kennlinienfeldes.

Für die Umsetzung der jeweils ausgewählten Ernteprozeßstrategie auf der Basis des Systemmodells ist gemäß Anspruch 13 vorgesehen, mindestens eine Umsetzungsvorschrift in dem Speicher zu hinterlegen. Ein Beispiel für eine solche Umsetzungsvorschrift ist die Ermittlung des mindestens einen Dreschwerksparameters in einem reinen Steuervorgang. Im einfachsten Fall arbeitet die Rechenvorrichtung zur Ermittlung des mindestens einen Dreschwerksparameters als Kennfeldsteuerung basierend auf dem oben angesprochenen, mindestens einen Kennlinienfeld. Im Zuge der Ermittlung des mindestens einen Dreschwerksparameters kann auf aufwändige Regelungsprozesse mit entsprechend regelungstechnischer Rückkopplung verzichtet werden.

Eine weitere bevorzugt zur Anwendung kommende Umsetzungsvorschrift besteht in einer bevorzugten Variante von Anspruch 13 darin, dass zur gleichzeitigen Umsetzung von miteinander konkurrierenden Ernteprozeßstrategien eine Mehrzieloptimierung zur Anwendung kommt.

Schließlich besteht eine weiter bevorzugte Umsetzungsvorschrift gemäß Anspruch 14 in der Definition von Prämissen, auf deren Basis die Rechenvorrichtung eine Priorisierung zwischen verschiedenen Aspekten vornimmt. Speziell im Rahmen der Mehrzieloptimierung ermöglicht die Definition von Prämissen eine effektive Ermittlung von Dreschwerksparametern. Die Ansprüche 16 bis 18 betreffen eine bevorzugte Auswahl solcher Prämissen.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine Seitenansicht eines vorschlagsgemäßen Mähdreschers,
- Fig. 2: eine schematische Darstellung eines Fahrerassistenzsystems eines vorschlagsgemäßen Mähdreschers
- Fig. 3: zwei Kennlinienfelder mit der Ausgangsgröße "Ausdruschverluste" und mit den Eingangsgrößen a) "Schichthöhe" und "Trommeldrehzahl" und b) "Schichthöhe" und "Korbweite",
- Fig. 4: zwei Kennlinienfelder mit der Ausgangsgröße "Abscheideverluste" und mit den Eingangsgrößen a) "Schichthöhe" und "Trommeldrehzahl" und b) "Schichthöhe" und "Korbweite",
- Fig. 5: zwei Kennlinienfelder mit der Ausgangsgröße "Dreschwerksbelastung" und mit den Eingangsgrößen a) "Schichthöhe" und "Trommeldrehzahl" und b) "Schichthöhe" und "Korbweite"
- Fig. 6: zwei Kennlinienfelder mit der Ausgangsgröße "Bruchkornanteile" und mit den Eingangsgrößen a) "Schichthöhe" und "Trommeldrehzahl" und b) "Schichthöhe" und "Korbweite",
- Fig. 7: zwei Kennlinienfelder mit der Ausgangsgröße "Reinigungsverluste" und mit den Eingangsgrößen a) "Schichthöhe" und "Trommeldrehzahl" und b) "Schichthöhe" und "Korbweite".

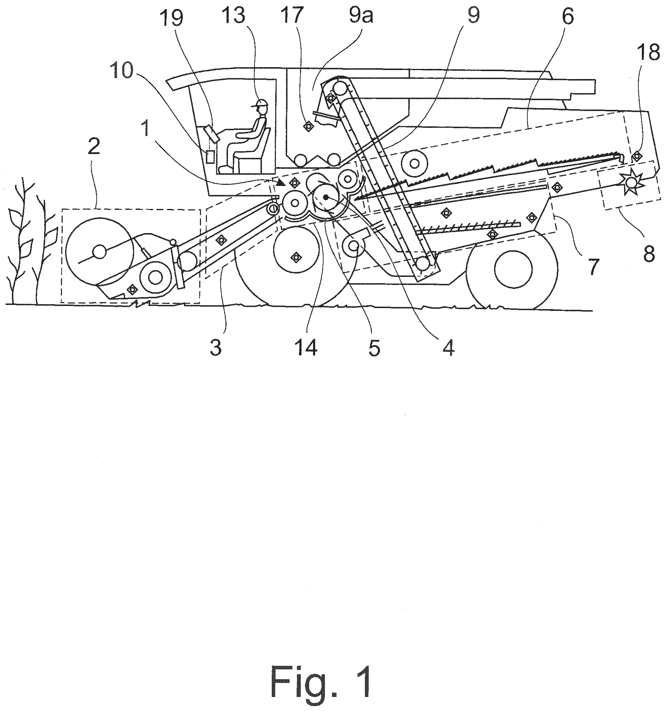

Ein vorschlagsgemäßer Mähdrescher weist ein Dreschwerk 1 zum Dreschen von aufgenommenem Erntegut zu Korngut auf. Unter dem Erntegut ist dabei das gesamte vom Feldbestand aufgenommene und dem Dreschwerk 1 zugeführte Material zu verstehen, wobei das Korngut dann die von dem Mähdrescher aus dem Erntegut zu gewinnenden Körner bezeichnet. Wie in Fig. 1 zu erkennen ist, wird ein Feldbestand durch ein Schneidwerk 2 des Mähdreschers abgemäht und das somit gewonnene Erntegut durch einen Schrägförderer 3 dem Dreschwerk 1 zugeführt.

Das Dreschwerk 1 ist mit einer Dreschtrommel 4 ausgestattet, die mit einem Dreschkorb 5 zusammenwirkt. Dem Dreschwerk 1 ist eine Abscheideanordnung 6 prozesstechnisch nachgelagert. Der dem Dreschwerk 1 zugeführte Erntegutstrom wird also im Anschluss - ohne das bereits hier gewonnene Korngut - der Abscheideanordnung 6 zugeführt.

Grundsätzlich dient das Dreschwerk 1 zum Ausreiben des überwiegenden Teils des Kornguts aus dem Stroh des Ernteguts durch den Dreschvorgang. In der Abscheideanordnung 6 wird dann das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 1 und der Abscheideanordnung 6 gewonnene Korngut wird dann einer Reinigungsanordnung 7 zugeführt. In der Reinigungsanordnung 7, welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung 9, z.B. einem Kornelevator, in einen Korntank 9a. Das ausgedroschene Stroh - also das verbliebene Erntegut in der Abscheideanordnung 6 - wird von dem Mähdrescher abgelegt, z. B. als Schwad entlang der Fahrspur.

Ein obiges Dreschwerk 1 kann durch die Vorgabe verschiedener Maschinenparameter angesteuert werden. Hierunter fallen in Abhängigkeit vom Aufbau des Dreschwerks 1 Antriebsparameter wie beispielsweise eine Trommeldrehzahl 1a oder sonstige Bewegungskennzahlen der Dreschtrommel 4 sowie eine Korbweite 1b - also der Abstand zwischen der Dreschtrommel 4 und einem Dreschkorb 5. Sofern das Dreschwerk 1 Entgrannerklappen aufweist, können auch diese im Rahmen der Ansteuerung des Dreschwerks 1 verstellt werden.

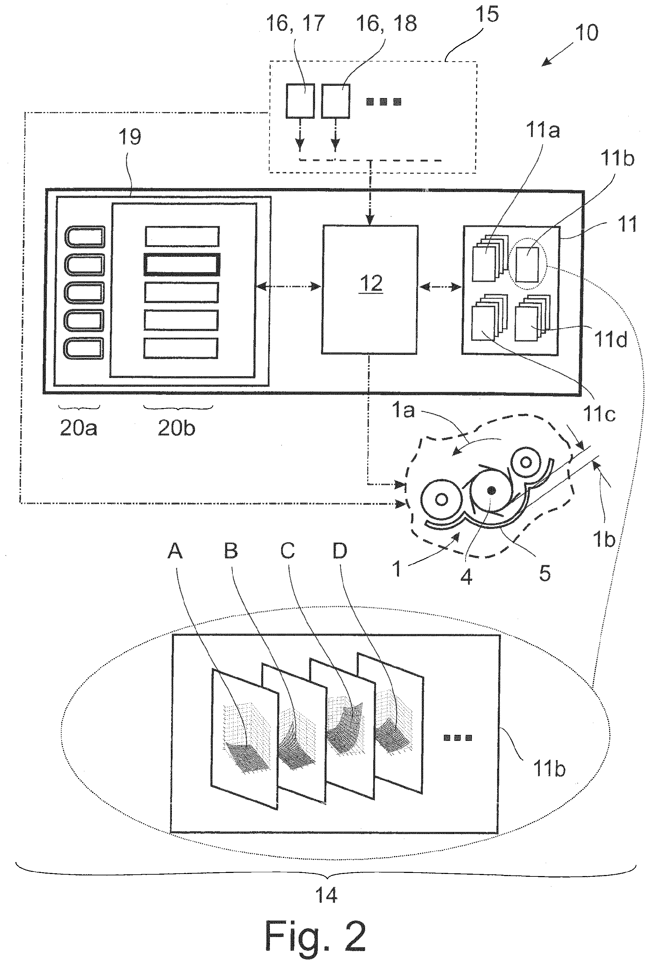

Der vorschlagsgemäße Mähdrescher weist ferner ein Fahrerassistenzsystem 10 zur Ansteuerung des Dreschwerks 1 auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem dazu eingerichtet, einen Fahrer 13 des Mähdreschers bei der Bedienung des Mähdreschers zu unterstützen. Das Fahrerassistenzsystem 10 mit dem Speicher 11 und der Rechenvorrichtung 12 ist schematisch in Fig. 2 gezeigt.

Vorzugsweise bildet das Dreschwerk 1 zusammen mit dem Fahrerassistenzsystem 10 einen Dreschautomaten 14. Dies ist vorzugsweise dadurch realisiert, dass im Speicher 11 eine Mehrzahl auswählbarer Ernteprozeßstrategien 11a hinterlegt sind und dass die Rechenvorrichtung 12 dazu eingerichtet ist, zur Umsetzung der ausgewählten Ernteprozeßstrategie 11a bzw. der Ernteprozeßstrategien 11a mindestens einen Maschinenparameter für das Dreschwerk 1 insbesondere autonom zu ermitteln und dem Dreschwerk 1 vorzugeben. Solche Maschinenparameter für das Dreschwerk 1 werden vorliegend als "Dreschwerksparameter" bezeichnet. Auf diese Weise wird ein Dreschwerkautomat 14 bereitgestellt, welcher alle für die Arbeit des Dreschwerks 1 relevanten Größen umfassend untereinander koordiniert regelt. Es wird also insbesondere vermieden, dass von unterschiedlicher Seite konkurrierende und sich gegebenenfalls gegenseitig aushebelnde Ansteuerungen erfolgen. Vielmehr erfolgt die Ansteuerung aller relevanten Parameter "aus einer Hand". Ebenso kann der Fahrer 13 ein gewünschtes qualitatives Ergebnis vorgeben und braucht kein eigenes Expertenwissen zu dem für dieses Ergebnis erforderlichen detaillierten Einzelheiten.

Es handelt sich bei der Ermittlung der Dreschwerksparameter um eine autonome Ermittlung insoweit, dass prinzipiell die Ernteprozeßstrategie 11a durch die Rechenvorrichtung 12 umgesetzt wird, ohne dass bei der Ermittlung der Dreschwerksparameter 1a, 1b im engeren Sinne ein Eingreifen des Fahrers 13 oder eine Rückfrage an den Fahrer 13 nötig ist. Ein solches Eingreifen des Fahrers 13 ist demnach weiterhin prinzipiell möglich, aber nicht erforderlich. Dabei unterscheiden sich die hinterlegten Ernteprozeßstrategien 11a in der Zielvorgabe der Einstellung oder der Optimierung von Ernteprozessparametern, wie noch erläutert wird.

Es darf darauf hingewiesen werden, dass das Fahrerassistenzsystem 10 grundsätzlich zentral ausgestaltet sein kann. Es dient insoweit der Ansteuerung nicht nur des Dreschwerks 1, sondern auch vor- und nachgelagerter Arbeitsorgane, wie des Schneidwerks 2, des Schrägförderers 3, der Abscheideanordnung 6, der Reinigungsanordnung 7 sowie der Verteilanordnung 8. Grundsätzlich ist es aber denkbar, dass das Fahrerassistenzsystem 10 dezentral strukturiert ist und aus einer Anzahl einzelner Steuersysteme zusammengesetzt ist. Dann kann es beispielsweise vorgesehen sein, dass zumindest ein Teil der Arbeitsorgane des Mähdreschers jeweils ein zugeordnetes, dezentrales Steuersystem aufweisen.

In dem Speicher 11 des Fahrerassistenzsystems 10 ist ein funktionales Systemmodell 11b für zumindest einen Teil des Mähdreschers hinterlegt, wobei die Rechenvorrichtung 12 die oben angesprochene, autonome Ermittlung des mindestens einen Dreschwerksparameters 1a, 1b basierend auf dem Systemmodell 11b vornimmt.

Bei dem funktionalen Systemmodell 11b handelt es sich um ein rechnerisches Modell zur Abbildung funktionaler Zusammenhänge innerhalb des Mähdreschers. Beispiele für solche funktionalen Zusammenhänge werden weiter unten erläutert.

Das Systemmodell 11b wird von der Rechenvorrichtung 12 vorzugsweise im laufenden Erntebetrieb auf den aktuellen Ernteprozesszustand abgeglichen. Dies bedeutet, dass die Rechenvorrichtung 12 überprüft, ob die in dem Systemmodell 11b abgebildeten funktionalen Zusammenhänge mit dem tatsächlichen Ernteprozesszustand übereinstimmen. Sofern sich bei dieser Überprüfung Abweichungen ergeben, nimmt die Rechenvorrichtung 12 eine entsprechende Änderung des Systemmodells 11b vor. Dieser Abgleich erfolgt in besonders bevorzugter Ausgestaltung zyklisch, wobei im Hinblick auf das weite Verständnis des Begriffs "zyklisch" auf den allgemeinen Teil der Beschreibung verwiesen werden darf.

In einer bevorzugten Ausgestaltung gleicht die Rechenvorrichtung 12 das Systemmodell 11b in einem rekursiven Verfahren auf den tatsächlichen Ernteprozesszustand ab und legt das Systemmodell 11b in dem Speicher 11 ab. Dies wird dadurch bewerkstelligt, dass das vor dem Abgleich im Speicher 11 abgelegte Systemmodell 11b bei dem Abgleich berücksichtigt wird. So ist ein schrittweiser Abgleich des Systemmodells 11b vorgesehen.

Im Sinne kurzer Reaktionszeiten des Mähdreschers auf sich verändernde Ernteprozesszustände ist es vorzugsweise vorgesehen, dass die Rechenvorrichtung 12 die Dreschwerksparameter in obigem Sinne zyklisch ermittelt. Auch in diesem Zusammenhang darf auf das weite Verständnis des Begriffs "zyklisch" verwiesen werden.

Wie weiter oben erläutert, umfasst der Begriff "Ernteprozesszustand" alle den Ernteprozess betreffenden Informationen. Dazu gehören Feldbestandsinformationen wie "Bestandsdichte", "Dreschbarkeit des Bestands" und "Bestandsfeuchte". Ferner gehören dazu der Ernteprozessparameter "Ausdruschverluste" als ein Maß für die nicht ausgedroschenen, auf dem Feld abgelegten Körner, der Ernteprozessparameter "Bruchkornanteile" als ein Maß für die gebrochenen, im Korntank abgelegten Körner, der Ernteprozeßparameter "Schichthöhe" als ein Maß für den Durchsatz, der Ernteprozeßparameter "Abscheideverluste" als Maß für die von der Abscheideanordnung 6 auf dem Feld abgelegten Körner, der Ernteprozeßparameter "Reinigungsverluste" als Maß für die von der Reinigungsanordnung 7 auf dem Feld abgelegten Körner, der Ernteprozeßparameter "Schlupf-Dreschwerk-Antrieb" als ein Maß für Dreschwerksbelastung und den Ernteprozeßparameter "Kraftstoffverbrauch" als ein Maß für den Energieverbrauch des Dreschwerksantriebs. Schließlich gehören dazu Dreschwerksparameter wie "Trommeldrehzahl" und "Korbweite" sowie Umgebungsinformationen wie "Umgebungstemperatur" und "Umgebungsfeuchte". All diese dem Ernteprozesszustand zuzurechnenden Informationen lassen sich auf unterschiedliche Art und Weise ermitteln.

Hinsichtlich des Begriffs "Schichthöhe" darf darauf hingewiesen werden, dass dieser Begriff weit auszulegen ist und sowohl die Schichthöhe des vom Dreschwerk aufgenommenen Gutstroms im engeren Sinne als auch den Durchsatz des durch das Dreschwerk 1 durchlaufenden Gutstroms umfasst. Insoweit gelten alle Ausführungen zu der Schichthöhe gleichermaßen für den Durchsatz. Insbesondere kann der Begriff "Schichthöhe" vorliegend durch den Begriff "Durchsatz" ersetzt werden.

In einer bevorzugten Ausgestaltung ist eine Sensoranordnung 15 zur Erfassung zumindest eines Teils des Ernteprozesszustands vorgesehen. Vorzugsweise ist die Sensoranordnung 15 mit mehreren Sensoren 16 ausgestattet. Beispielsweise weist die Sensoranordnung 15 einen Korngutsensor 17 zur Erfassung einer Korngutinformation auf. Der Korngutsensor 17 kann dabei - gemäß der Darstellung der Fig. 1 - als Kornkameraanordnung ausgestaltet sein. Der Korngutsensor 17 kann insbesondere zur Erfassung eines oben angesprochenen Bruchkornanteils, eines Nichtkornanteils, eines Grannenkornanteils und/oder eines Ährenspitzenanteils eingerichtet sein. Hierzu kann der, potentiell mehrteilige, Korngutsensor 17 zur Erfassung der Korngutinformation in dem Korntank 9a und/oder in der Transportanordnung 9 des Mähdreschers eingerichtet sein.

Alternativ oder zusätzlich kann die Sensoranordnung 15 - wie ebenfalls in der Fig. 1 dargestellt - einen Schwadsensor 18 zur Erfassung einer Schwadinformation aufweisen. Ein Schwadsensor 18 lässt sich bei geeigneter Auslegung zur Erfassung eines Kornanteils im Schwad nutzen. Ein solcher Kornanteil stellt entsprechend einen Verlust an Korngut dar.

Alternativ zu der Erfassung des Ernteprozesszustands mittels einer Sensoranordnung 15 kann es auch vorgesehen sein, dass eine Ein-/Ausgabevorrichtung 19 dem Fahrerassistenzsystem 10 zugeordnet ist, wobei zumindest ein Teil des Ernteprozesszustands über die Ein-/Ausgabevorrichtung 19 eingebbar ist. Dabei ist es vorzugsweise so, dass die Rechenvorrichtung 12 Abfragen betreffend den aktuellen Ernteprozesszustand erzeugt und über die Ein-/Ausgabevorrichtung 19 ausgibt. Auf eine solche Abfrage hin kann der Fahrer 13 zumindest einen Teil des Ernteprozesszustands über die Ein-/Ausgabevorrichtung eingeben. Hierfür weist die Ein-/Ausgabevorrichtung 19 entsprechende Eingabeelemente 20a und Ausgabeelemente 20b auf.

Eine obige Abfrage besteht vorzugsweise darin, ob die Dreschbarkeit des Feldbestands "leicht zu dreschen", "normal zu dreschen" oder" schwer zu dreschen" ist. Im einfachsten Falle wird dem Fahrer 13 eine Auswahl aus vorbestimmten Antworten bereitgestellt.

Wie oben erläutert, wird das Systemmodell 11b vorzugsweise zyklisch auf den tatsächlichen Ernteprozesszustand abgeglichen. Als Anfangswert für das Systemmodell 11b ist in dem Speicher 11 mindestens ein Initialmodell 11c hinterlegt, wobei bei der ersten Ermittlung des mindestens einen Dreschwerksparameters die Rechenvorrichtung 12 die Ermittlung basierend auf dem Initialmodell 11c vornimmt. Die Formulierung "erste Ermittlung" steht für die Situation insbesondere zu Beginn des Erntebetriebs, in der ein Abgleich des Systemmodells 11b noch nicht vorgenommen worden ist.

In besonders bevorzugter Ausgestaltung sind in dem Speicher 11 mindestens zwei Initialmodelle 11c hinterlegt, wobei die Rechenvorrichtung 12 in Abhängigkeit von dem jeweiligen Ernteprozesszustand ein Initialmodell 11c auswählt, auf dem die anschließende Ermittlung der Dreschwerksparameter zunächst basiert.

Die in Rede stehenden, vom Fahrer 13 auswählbaren Ernteprozeßstrategien 11a sind jeweils auf verschiedene Zielvorgaben gerichtet. In einer ersten Variante ist mindestens eine Ernteprozeßstrategie 11a auf die Zielvorgabe der Einstellung oder der Optimierung mindestens eines Ernteprozessparameters wie "Ausdruschverluste", "Bruchkornanteil", "Abscheideverluste", "Reinigungsverluste", "Dreschwerksbelastung", "Kraftstoffverbrauch" o. dgl. gerichtet. Die Umsetzung der Ernteprozeßstrategien 11a soll dabei jeweils durch eine entsprechende Vorgabe von Dreschwerksparametern, hier und vorzugsweise der für die Ansteuerung des Dreschwerks 1 im Vordergrund stehenden Dreschwerksparameter "Trommeldrehzahl" und "Korbweite", erfolgen.

Das Systemmodell 11b bildet vorzugsweise zumindest einen Teil der funktionalen Zusammenhänge zwischen einem Ernteprozessparameter und mindestens einem weiteren Parameter, hier und vorzugsweise mindestens einem Dreschwerksparameter wie "Trommeldrehzahl" und "Korbweite" und/oder mindestens einem weiteren Ernteprozessparameter wie "Schichthöhe" ab.

Zur Abbildung der funktionalen Zusammenhänge ist mindestens einem Ernteprozessparameter mindestens ein Kennlinienfeld A-J zugeordnet, wobei dieser Ernteprozessparameter hier als Ausgangsgröße des mindestens einen Kennlinienfeldes A-J definiert ist.

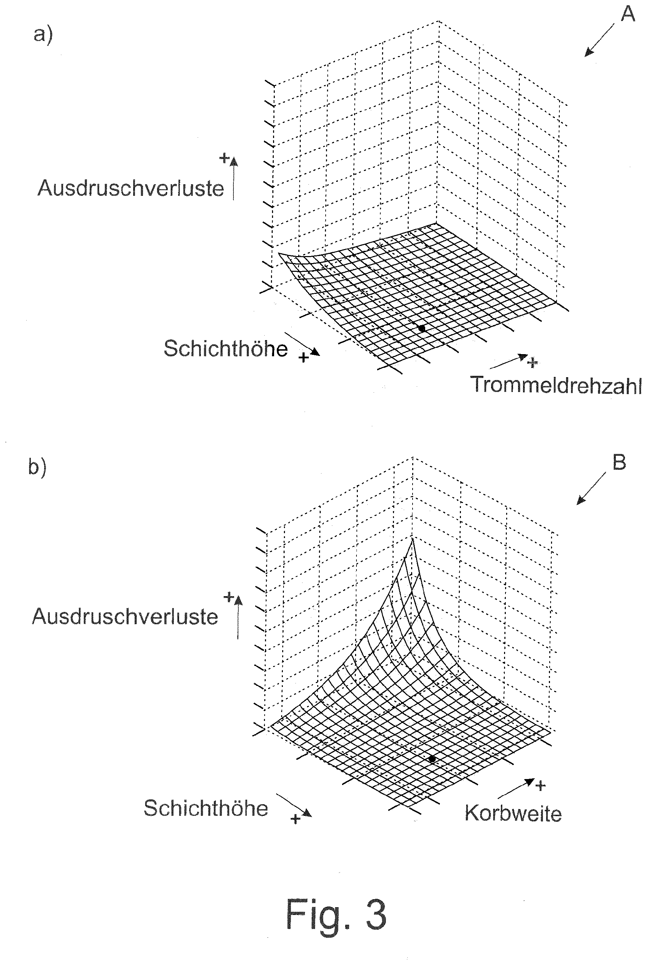

In besonders bevorzugter Ausgestaltung und in den Fig. 3 bis 7 dargestellt ist es so, dass der Ernteprozessparameter "Schichthöhe" und ein Dreschwerksparameter, vorzugsweise der Dreschwerksparameter "Trommeldrehzahl" oder der Dreschwerksparameter "Korbweite", als Eingangsgrößen für das mindestens eine Kennlinienfeld A-J definiert sind.

Zur Abbildung der funktionalen Zusammenhänge zwischen einem Ernteprozeßparameter als Ausgangsgröße und verschiedenen Eingangsgrößen sind diesem Ernteprozeßparameter ein erstes Kennlinienfeld und ein zweites Kennlinienfeld zugeordnet. Dabei bilden für das erste Kennlinienfeld A,C,E,G,I der weitere Ernteprozessparameter "Schichthöhe" und der Dreschwerksparameter "Trommeldrehzahl" die Eingangsgrößen (Abbildung a) in den Fig. 3 bis 7), während für das zweite Kennlinienfeld B,D,F,H,J der weitere Ernteprozessparameter "Schichthöhe" und der Dreschwerksparameter "Korbweite" die Eingangsgrößen bilden (Abbildung b) in den Fig. 3 bis 7).

Fig. 3a) zeigt das Kennlinienfeld A zu dem funktionalen Zusammenhang zwischen der Ausgangsgröße "Ausdruschverluste" und den Eingangsgrößen "Schichthöhe" und "Trommeldrehzahl". Hieraus ergibt sich, dass der Ausdrusch umso besser ist, je höher die den Durchsatz repräsentierende Eingangsgröße Schichthöhe und je höher die Dreschtrommeldrehzahl.

Fig. 3b) zeigt das Kennlinienfeld B zu dem funktionalen Zusammenhang zwischen der Ausgangsgröße "Ausdruschverluste" und den Eingangsgrößen "Schichthöhe" und "Korbweite". Hieraus ergibt sich, dass der Ausdrusch umso besser ist, je höher die den Durchsatz repräsentierende Schichthöhe und je niedriger die Korbweite.

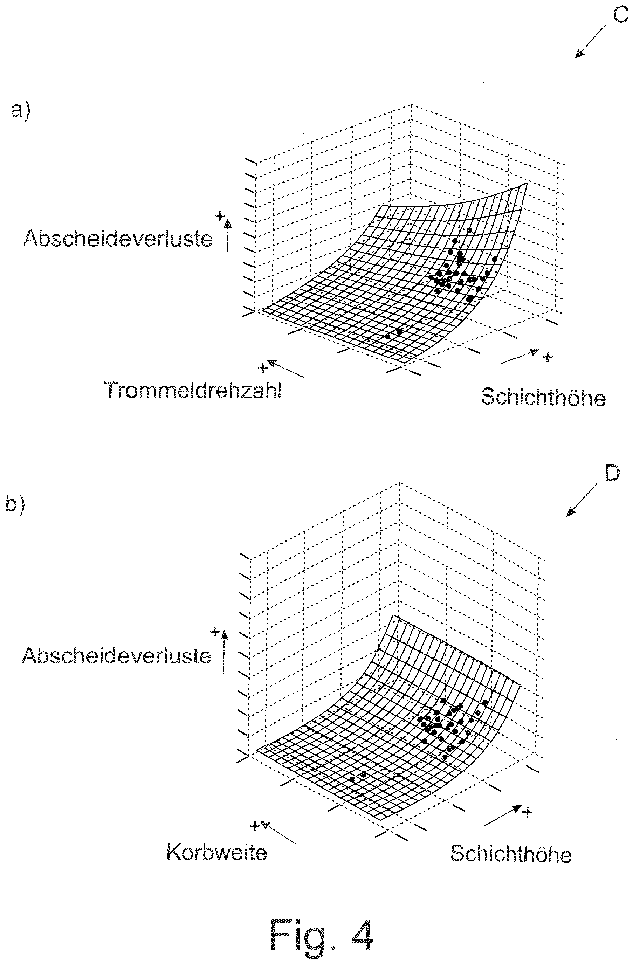

Fig. 4a) zeigt das Kennlinienfeld C zu dem funktionalen Zusammenhang zwischen der Ausgangsgröße "Abscheideverluste" und den Eingangsgrößen "Schichthöhe" und "Trommeldrehzahl". Hieraus ergibt sich, dass mit ansteigender Schichthöhe und absinkender Dreschtrommeldrehzahl die Abscheideverluste zunehmen, bzw. die Abscheidung sinkt.

Fig. 4b) zeigt das Kennlinienfeld D zu dem funktionalen Zusammenhang zwischen der Ausgangsgröße "Abscheideverluste" und den Eingangsgrößen "Schichthöhe" und "Korbweite". Hieraus ergibt sich, dass mit ansteigender, den Durchsatz repräsentierender Schichthöhe und ansteigender Korbweite die Abscheideverluste zunehmen.

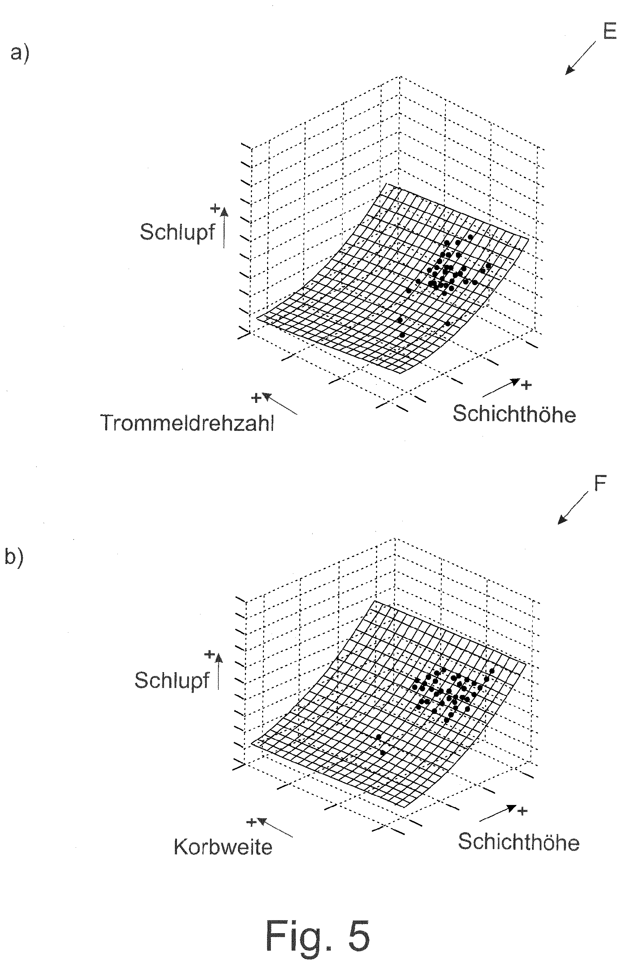

Fig. 5a) zeigt das Kennlinienfeld E zu dem funktionalen Zusammenhang zwischen der die Dreschwerksbelastung repräsentierende Ausgangsgröße "Schlupf-Dreschwerk-Antrieb" und den Eingangsgrößen "Schichthöhe" und "Trommeldrehzahl". Hieraus ergibt sich, dass mit ansteigender, den Durchsatz repräsentierender Schichthöhe und absinkender Trommeldrehzahl die Belastung des Dreschwerks, hier der Schlupf im Antriebsstrang des Dreschwerks, ansteigt.

Fig. 5b) zeigt das Kennlinienfeld F zu dem funktionalen Zusammenhang zwischen der Ausgangsgröße "Schlupf-Dreschwerk-Antrieb" und den Eingangsgrößen "Schichthöhe" und "Korbweite". Hieraus ergibt sich, dass mit ansteigender Schichthöhe und absinkender Korbweite der Schlupf im Dreschwerk-Antrieb ansteigt.

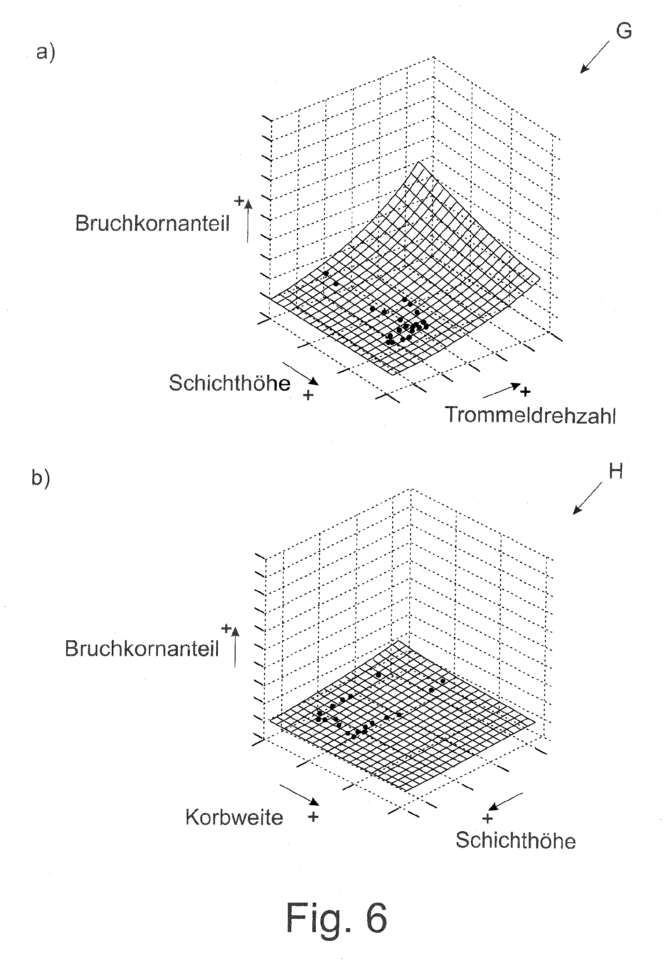

Fig. 6a) zeigt das Kennlinienfeld G zu dem funktionalen Zusammenhang zwischen der Ausgangsgröße "Bruchkornanteil" und den Eingangsgrößen "Schichthöhe" und "Trommeldrehzahl". Hieraus ergibt sich, dass mit ansteigender Trommeldrehzahl 1a und absinkender Schichthöhe der Bruchkornanteil ansteigt.

Fig. 6b) zeigt das Kennlinienfeld H zu dem funktionalen Zusammenhang zwischen der Ausgangsgröße "Bruchkornanteil" und den Eingangsgrößen "Schichthöhe" und "Korbweite". Hieraus ergibt sich, dass mit absinkender, den Durchsatz repräsentierender Schichthöhe und absinkender Korbweite der Bruchkornanteil ansteigt.

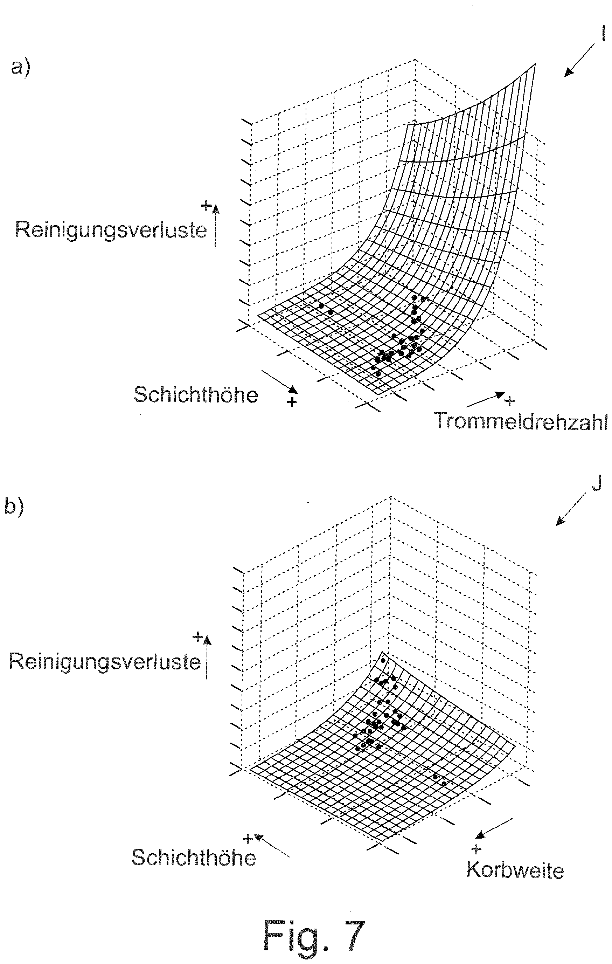

Fig. 7a) zeigt das Kennlinienfeld I zu dem funktionalen Zusammenhang zwischen der Ausgangsgröße "Reinigungsverluste" und den Eingangsgrößen "Schichthöhe" und "Trommeldrehzahl". Hieraus ergibt sich, dass mit ansteigender Trommeldrehzahl 1a und ansteigender, den Durchsatz repräsentierender Schichthöhe die Reinigungsverluste ansteigen.

Fig. 7b) zeigt das Kennlinienfeld J zu dem funktionalen Zusammenhang zwischen der Ausgangsgröße "Reinigungsverluste" und den Eingangsgrößen "Schichthöhe" und "Korbweite". Hieraus ergibt sich, dass mit abnehmender Korbweite 1b und ansteigender, den Durchsatz repräsentierender Schichthöhe die Reinigungsverluste ansteigen.

Bei den Darstellungen der Kennlinienfelder A-J in den Fig. 3 bis 7 ist zu berücksichtigen, dass die Skalierungen der Ausgangsgröße in den jeweiligen Abbildungen a) und b) identisch sind. Daraus ergibt sich, dass in Abhängigkeit von der jeweiligen Eingangsgröße eine Einstellung der Ausgangsgröße vornehmlich über die Trommeldrehzahl 1a oder vornehmlich über die Korbweite 1b vorgenommen werden kann. Ferner ergibt sich aus den Darstellungen der Kennlinienfelder A-J in den Fig. 3 bis 7, dass verschiedene Strategien der Einstellung oder Optimierung von Ausgangsgrößen miteinander konkurrieren können. Dies ist insbesondere für die weiter unten erläuterten Umsetzungsvorschriften von Bedeutung.

Grundsätzlich kann es vorgesehen sein, dass die Rechenvorrichtung 12 der Ermittlung des mindestens einen Ernteprozessparameters stets ein und dasselbe Kennlinienfeld A-J, ggf. mit einer auf den obigen Abgleich zurückgehenden Modifizierung, zugrunde legt. Vorzugsweise ist es jedoch so, dass die Rechenvorrichtung 12 mindestens ein Kennlinienfeld A-J in Abhängigkeit von dem aktuellen Ernteprozesszustand auswählt und der Ermittlung des mindestens einen Dreschwerksparameters zugrunde legt. Damit kann beispielsweise mit einer geeigneten Wahl des Kennlinienfelds A-J auf eine Änderung von Ernteprozeßzuständen, beispielsweise auf eine Änderung von einer Bestandsfeuchte o. dgl., reagiert werden.

Der oben erläuterte Abgleich des Systemmodells 11b auf den aktuellen Ernteprozeßzustand erfolgt für den Fall des Systemmodells 11b mit mindestens einem Kennlinienfeld A-J vorzugsweise dadurch, dass die Rechenvorrichtung 12 das mindestens eine Kennlinienfeld A-J im laufenden Erntebetrieb, insbesondere zyklisch, auf den Ernteprozesszustand abgleicht. Als Startwert ist in Anlehnung an das Initialmodell 11c in dem Speicher 11 mindestens ein Initialkennlinienfeld hinterlegt, wobei bei der ersten Ermittlung des mindestens einen Dreschwerksparameters die Rechenvorrichtung 12 entsprechend die Ermittlung des mindestens einen Dreschwerksparameters basierend auf dem Initialkennlinienfeld 11c vornimmt. In den Fig. 3 bis 7 sind jeweils eine Reihe von realen Sensormeßwerten zu dem jeweiligen Ernteprozeßzustand eingetragen. In dem obigen Abgleich nimmt die Rechenvorrichtung 12 eine Veränderung des jeweiligen Kennlinienfeldes A-J vor, um eine Annäherung des Kennlinienfeldes A-J an die realen Sensormeßwerte zu erreichen. Dabei kann beispielsweise das gesamte Kennlinienfeld A-J in Richtung der jeweiligen Ausgangsgröße, in den Fig. 3 bis 7 nach oben oder nach unten, verschoben werden. Besonders vorteilhaft ist allerdings, wenn die Annäherung des Kennlinienfeldes A-J so getroffen ist, dass sie auch eine Änderung der Verläufe der jeweiligen Kennlinien mit sich bringt.

Hier und vorzugsweise ist es so, dass zumindest eine auswählbare Ernteprozeßstrategie 11a mindestens zwei Teilstrategien umfasst, die jeweils auf die Einstellung oder Optimierung eines Ernteprozessparameters gerichtet sind. In diesem Sinne kann eine Ernteprozeßstrategie "Balance" vorgesehen sein, die zwei gewichtete, insbesondere gleichgewichtete, Teilstrategien, insbesondere die Teilstrategien der Einstellung oder Optimierung der Ernteprozeßparameter "Abscheideverluste" und "Ausdruschverluste", umfasst.

Für die Umsetzung der jeweiligen Ernteprozeßstrategie 11a mittels der Rechenvorrichtung 12 ist in dem Speicher 11 mindestens eine Umsetzungsvorschrift 11d hinterlegt. Für die Umsetzungsvorschrift 11d sind verschiedene vorteilhafte Varianten denkbar. In einer ersten Variante ist es vorgesehen, dass eine Umsetzungsvorschrift 11d die Ermittlung des mindestens einen Dreschwerksparameters in einem Steuervorgang, und nicht in einem Regelungsvorgang, umsetzt. Dabei arbeitet die Rechenvorrichtung 12 zur Ermittlung des mindestens einen Dreschwerksparameters vorzugsweise als Kennfeldsteuerung. Eine regelungstechnische Rückkopplung ist bei der Ermittlung der Dreschwerksparameter also nicht vorgesehen. Die Reaktion der Rechenvorrichtung 12 auf Änderungen im Ernteprozeßzustand ergibt sich allein aus dem oben erläuterten Abgleich des Systemmodells 11b auf den jeweils aktuellen Ernteprozeßzustand. Dieses Grundprinzip der Ansteuerung des Dreschwerks 1 führt zu einer Vereinfachung der Ermittlung der Dreschwerksparameter durch den Wegfall der regelungstechnischen Rückkopplung. Dadurch ergibt sich die Möglichkeit, auch komplexe funktionale Zusammenhänge, insbesondere die im Folgenden zu erläuternden konkurrierenden Strategien, mit geringem rechnerischem und zeitlichem Aufwand umzusetzen.

Konkurrierende Strategien können sich beispielsweise dadurch ergeben, dass zumindest eine auswählbare Ernteprozeßstrategie 11a mindestens zwei obige Teilstrategien umfasst, die im Hinblick auf ein und denselben Dreschwerksparameter miteinander konkurrieren. Eine zweite Möglichkeit besteht in diesem Zusammenhang darin, dass mindestens zwei auswählbare Ernteprozeßstrategien als solche im Hinblick auf ein und denselben Dreschwerksparameter miteinander konkurrieren. Beispielsweise erfordert gemäß Fig. 3a) die Ernteprozeßstrategie der Optimierung der Ausdruschverluste regelmäßig ein Ansteigen der Trommeldrehzahl, während gemäß Fig. 6a) die Ernteprozeßstrategie der Optimierung des Bruchkornanteils ein Absenken der Trommeldrehzahl erfordert. Dabei wird davon ausgegangen, dass die Optimierung hier stets die weitestgehende Reduzierung der Ausdruschverluste und des Bruchkornanteils betrifft.

In den obigen Situationen umfasst eine Umsetzungsvorschrift 11d zur Umsetzung der miteinander konkurrierenden Strategien vorzugsweise eine Mehrzieloptimierung, bei der es sich beispielsweise um eine Pareto-Optimierung handeln kann. Eine solche Mehrzieloptimierung lässt sich besonders einfach auf der Basis des Systemmodells 11b, vorzugsweise auf der Basis der obigen Kennlinienfelder A-J und weiter vorzugsweise unter Anwendung der oben genannten Kennfeldsteuerung umsetzen.

Insbesondere bei der Umsetzung der miteinander konkurrierenden Strategien ist es vorzugsweise vorgesehen, dass eine Umsetzungsvorschrift 11d mindestens eine Prämisse umfasst, auf deren Basis die Rechenvorrichtung 12 bei der autonomen Ermittlung des mindestens einen Dreschwerksparameters eine Priorisierung zwischen ausgewählten Ernteprozeßstrategien 11a und/oder zwischen Teilstrategien einer ausgewählten Ernteprozeßstrategie 11a und/oder zwischen einzustellenden oder zu optimierenden Ernteprozessparametern und/oder zwischen vorzugebenden Dreschwerksparametern vornimmt.

Dabei besteht eine bevorzugte Prämisse beispielsweise darin, dass die Rechenvorrichtung 12 die Einstellung oder Optimierung des Bruchkornanteils stets vorgelagert zu der Einstellung oder Optimierung der Ausdruschverluste vornimmt. Alternativ oder zusätzlich besteht eine bevorzugte Prämisse beispielsweise darin, dass für die Einstellung oder Optimierung der Ausdruschverluste die Vorgabe der Korbweite 1b präferiert ist gegenüber der Vorgabe der Trommeldrehzahl 1a. Eine weitere Prämisse kann vorzugsweise darin bestehen, dass für die Einstellung oder Optimierung des Bruchkornanteils die Vorgabe der Trommeldrehzahl 1a präferiert ist gegenüber der Vorgabe der Korbweite 1b.

Es sind im Übrigen weitere Umsetzungsvorschriften 11d denkbar, die auf bestimmte, in der Praxis besonders bedeutsame Einzelfälle gerichtet sind. Beispielsweise besteht für die Ernteprozeßstrategie 11a der Einstellung oder Optimierung des Ernteprozessparameters "Ausdruschverluste" eine Umsetzungsvorschrift darin, dass die Rechenvorrichtung 12 auf ein Absenken der Schichthöhe hin dem Dreschwerk 1 basierend auf dem Systemmodell 11b ein Ansteigen der Trommeldrehzahl 1a und/oder ein Absenken der Korbweite 1b vorgibt.

Schließlich ist es in diesem Zusammenhang denkbar, dass für die Ernteprozeßstrategie 11a der Einstellung oder Optimierung des Ernteprozessparameters "Abscheideverluste" eine Umsetzungsvorschrift 11d darin besteht, dass die Rechenvorrichtung 12 auf ein Ansteigen der Schichthöhe hin dem Dreschwerk 1 basierend auf dem Systemmodell 11b ein Ansteigen der Trommeldrehzahl 1a vorgibt.

Das Systemmodell 11b einerseits und die Umsetzungsvorschriften 11d andererseits sind vorzugsweise so getroffen, dass die Rechenvorrichtung 12 zur Umsetzung der Ernteprozeßstrategie "Balance" zwischen den Teilstrategien der Optimierung des Ernteprozeßparameters "Abscheideverluste" und der Optimierung des Ernteprozeßparameters "Ausdruschverluste" autonom die Dreschwerksparameter "Trommeldrehzahl" und "Korbweite" im oberen Drittel ihres jeweiligen Einstellbereichs ansetzt.

Weiter ergibt sich ein Verhalten des Mähdreschers vorzugsweise derart, dass die Rechenvorrichtung 12 zur Umsetzung der Ernteprozeßstrategie umfassend die Teilstrategie der Einstellung oder Optimierung des Ernteprozeßparameters "Schlupf-Dreschwerk-Antrieb" und die Teilstrategie der Einstellung und Optimierung des Ernteprozeßparameters "Bruchkornanteil" autonom den Dreschwerksparameter "Trommeldrehzahl" im mittleren Drittel und des Ernteprozeßparameters "Korbweite" im oberen Drittel ihres jeweiligen Einstellbereichs ansetzt.

### Bezugszeichenliste

- 1: Dreschwerk
- 1a: Trommeldrehzahl
- 1b: Korbweite 1b
- 2: Schneidwerk
- 3: Schrägförderer
- 4: Dreschtrommel
- 5: Dreschkorb
- 6: Abscheidevorrichtung
- 7: Reinigungsvorrichtung
- 8: Verteilanordnung
- 9: Transportanordnung
- 9a: Korntank
- 10: Fahrerassistenzsystem
- 11: Speicher
- 11a: Ernteprozeßstrategie
- 11b: Systemmodell
- 11c: Initialmodell
- 11d: Umsetzungsvorschrift
- 12: Rechenvorrichtung
- 13: Fahrer
- 14: Dreschautomat
- 15: Sensoranordnung
- 16: Sensor
- 17: Korngutsensor
- 18: Schwadsensor
- 19: Ein-/Augabevorrichtung
- 20a: Eingabeelemente
- 20b: Ausgabeelemente
- A-J: Kennlinienfelder

## Patentansprüche

1. Mähdrescher mit einem Dreschwerk (1) zum Dreschen von aufgenommenem Erntegut zu Korngut und mit einem Fahrerassistenzsystem (10) zur Ansteuerung des Dreschwerks (1), wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst,
**dadurch gekennzeichnet,**
**dass** in dem Speicher (11) ein funktionales Systemmodell (11b) für zumindest einen Teil des Mähdreschers hinterlegt ist, wobei das funktionale Systemmodell (11b) zumindest einen Teil der funktionalen Zusammenhänge innerhalb des Mähdreschers abbiildet und dass die Rechenvorrichtung (12) dazu eingerichtet ist, eine insbesondere autonome Ermittlung mindestens eines Maschinenparameters, nämilich eines Dreschwerksparameters (1a, 1b) basierend auf dem Systemmodell (11b) vorzunehmen und dass zur Abbildung der funktionalen Zusammenhänge mindestens einem Ernteprozessparameter mindestens ein Kennlinienfeld (A-J) zugeordnet ist und dass dieser Ernteprozessparameter als Ausgangsgröße des mindestens einen Kennlinienfeldes (A-J) definiert ist., und wobei das Dreschwerk (1) zusammen mit dem Fahrerassistenzsystem (10) einen Dreschautomaten (14) bildet, indem im Speicher (11) eine Mehrzahl auswählbarer Ernteprozeßstrategien (11a) hinterlegt sind und indem die Rechenvorrichtung (12) dazu eingerichtet ist, zur Umsetzung der jeweils ausgewählten Ernteprozeßstrategie (11a) mindestens einen Dreschwerksparameter (1a, 1b) autonom zu ermitteln und dem Dreschwerk (1) vorzugeben.

2. Mähdrescher nach Anspruch 1, **dadurch gekennzeichnet, dass** der Ernteprozesszustand Feldbestandsinformationen wie "Bestandsdichte", "Dreschbarkeit", "Bestandsfeuchte" und/oder Ernteprozessparameter wie "Ausdruschverluste", "Bruchkornanteil", "Schichthöhe", "Abscheideverluste", "Reinigungsverluste", "Dreschwerksbelastung", "Kraftstoffverbrauch" und/oder Dreschwerksparameter wie "Trommeldrehzahl", "Korbweite" und/oder Umgebungsinformationen wie "Umgebungstemperatur", "Umgebungsfeuchte", umfasst.

3. Mähdrescher nach einem der vorhergehenden Ansprüche, **dadurch gekennzeichnet, dass** die Rechenvorrichtung (12) Abfragen betreffend den aktuellen Ernteprozesszustand erzeugt und über eine Ein-/Ausgabevorrichtung (19) ausgibt und dass auf eine Abfrage hin zumindest ein Teil des Ernteprozesszustands über die Ein-/Ausgabevorrichtung (19) eingebbar ist.

4. Mähdrescher nach einem der vorhergehenden Ansprüche, **dadurch gekennzeichnet, dass** der Ernteprozessparameter "Schichthöhe" und ein Dreschwerksparameter, vorzugsweise der Dreschwerksparameter "Trommeldrehzahl" oder der Dreschwerksparameter "Korbweite", die Eingangsgrößen für das mindestens eine Kennlinienfeld (A-J) sind.

5. Mähdrescher nach einem der vorhergehenden Ansprüche, **dadurch gekennzeichnet, dass** mindestens einem Ernteprozessparameter wie "Ausdruschverluste", "Bruchkornanteil", "Abscheideverluste", "Reinigungsverluste", "Dreschwerksbelastung", "Kraftstoffverbrauch" ein erstes Kennlinienfeld (A,C,E,G,I) und ein zweites Kennlinienfeld (B,D,F,H,J) zugeordnet sind, für die dieser Ernteprozessparameter jeweils die Ausgangsgröße bildet, dass für das erste Kennlinienfeld (A,C,E,G,I) der weitere Ernteprozessparameter "Schichthöhe" und der Dreschwerksparameter "Trommeldrehzahl" die Eingangsgrößen bilden und dass für das zweite Kennlinienfeld (B,D,F,H,J) der weitere Ernteprozessparameter "Schichthöhe" und der Dreschwerksparameter "Korbweite" die Eingangsgrößen bilden.

6. Mähdrescher nach einem der vorhergehenden Ansprüche, **dadurch gekennzeichnet, dass** dem Ernteprozeßparameter "Ausdruschverluste" ein Kennlinienfeld zugeordnet ist basierend auf dem qualitativen funktionalen Zusammenhang, dass der Ausdrusch umso besser ist, je höher die den Durchsatz repräsentierende Eingangsgröße Schichthöhe und je höher die Dreschtrommeldrehzahl, und/oder, dass dem Ernteprozeßparameter "Ausdruschverluste" ein Kennlinienfeld zugeordnet ist basierend auf dem qualitativen funktionalen Zusammenhang, dass der Ausdrusch umso besser ist, je höher die den Durchsatz repräsentierende Schichthöhe und je niedriger die Korbweite.

7. Mähdrescher nach einem der vorhergehenden Ansprüche, **dadurch gekennzeichnet, dass** dem Ernteprozeßparameter "Abscheideverluste" ein Kennlinienfeld zugeordnet ist basierend auf dem qualitativen funktionalen Zusammenhang, dass mit ansteigender, den Durchsatz repräsentierende Schichthöhe und absinkender Dreschtrommeldrehzahl die Abscheideverluste zunehmen, und/oder, dass dem Ernteprozeßparameter "Abscheideverluste" ein Kennlinienfeld zugeordnet ist basierend auf dem qualitativen funktionalen Zusammenhang, dass mit ansteigender, den Durchsatz repräsentierender Schichthöhe und ansteigender Korbweite die Abscheideverluste zunehmen.

8. Mähdrescher nach einem der vorhergehenden Ansprüche, **dadurch gekennzeichnet, dass** dem Ernteprozeßparameter des die Dreschwerkbelastung repräsentierenden "Schlupf-Dreschwerk-Antrieb" ein Kennlinienfeld zugeordnet ist basierend auf dem qualitativen funktionalen Zusammenhang, dass mit ansteigender, den Durchsatz repräsentierender Schichthöhe und absinkender Trommeldrehzahl der Schlupf im Antriebsstrang des Dreschwerks ansteigt, und/oder, dass dem Ernteprozeßparameter des die Dreschwerkbelastung repräsentierenden "Schlupf" ein Kennlinienfeld zugeordnet ist basierend auf dem qualitativen funktionalen Zusammenhang, dass mit ansteigender Schichthöhe und absinkender Korbweite der Schlupf im Antriebsstrang des Dreschwerks ansteigt.

9. Mähdrescher nach einem der vorhergehenden Ansprüche, **dadurch gekennzeichnet, dass** dem Ernteprozeßparameter "Bruchkornanteil" ein Kennlinienfeld zugeordnet ist basierend auf dem qualitativen funktionalen Zusammenhang, dass mit ansteigender Trommeldrehzahl und absinkender Schichthöhe der Bruchkornanteil ansteigt, und/oder, dass dem Ernteprozeßparameter "Bruchkornanteil" ein Kennlinienfeld zugeordnet ist basierend auf dem qualitativen funktionalen Zusammenhang, dass mit absinkender, den Durchsatz repräsentierender Schichthöhe und absinkender Korbweite der Bruchkornanteil ansteigt.

10. Mähdrescher nach einem der vorhergehenden Ansprüche, **dadurch gekennzeichnet, dass** dem Ernteprozeßparameter "Reinigungsverluste" ein Kennlinienfeld zugeordnet ist basierend auf dem qualitativen funktionalen Zusammenhang, dass mit ansteigender Trommeldrehzahl und ansteigender, den Durchsatz repräsentierender Schichthöhe die Reinigungsverluste ansteigen, und/oder, dass dem Ernteprozeßparameter "Reinigungsverluste" ein Kennlinienfeld zugeordnet ist basierend auf dem qualitativen funktionalen Zusammenhang, dass mit abnehmender Korbweite und ansteigender, den Durchsatz repräsentierender Schichthöhe die Reinigungsverluste ansteigen.

11. Mähdrescher nach einem der vorhergehenden Ansprüche, **dadurch gekennzeichnet, dass** die Rechenvorrichtung (12) das mindestens eine Kennlinienfeld (A-J) im laufenden Erntebetrieb, insbesondere zyklisch, auf den Ernteprozesszustand abgleicht, vorzugsweise, dass in dem Speicher (11) mindestens ein Initialkennlinienfeld (11c) hinterlegt ist und dass bei der ersten Ermittlung des mindestens einen Dreschwerksparameters die Rechenvorrichtung (12) die Ermittlung basierend auf dem Initialkennlinienfeld (11c) vornimmt.

12. Mähdrescher nach einem der vorhergehenden Ansprüche, **dadurch gekennzeichnet, dass** zumindest eine auswählbare Ernteprozeßstrategie (11a) mindestens zwei Teilstrategien umfasst, die jeweils auf die Einstellung oder Optimierung eines Ernteprozessparameters gerichtet sind, vorzugsweise, dass der Ernteprozeßstrategie "Balance" zwei gewichtete, insbesondere gleichgewichtete, Teilstrategien, insbesondere die Teilstrategien der Einstellung oder Optimierung der Ernteprozeßparameter "Abscheideverluste" und "Ausdruschverluste", umfasst.

13. Mähdrescher nach einem der vorhergehenden Ansprüche, **dadurch gekennzeichnet, dass** in dem Speicher (11) mindestens eine Umsetzungsvorschrift (11d) hinterlegt ist, nach der die Rechenvorrichtung (12) basierend auf dem Systemmodell (11b) die Umsetzung der jeweils ausgewählten Ernteprozeßstrategie (11a) durch Ermittlung des mindestens einen Dreschwerksparameters vornimmt, vorzugsweise, dass mindestens zwei ausgewählte Ernteprozeßstrategien (11a) oder mindestens zwei Teilstrategien einer ausgewählten Ernteprozeßstrategie (11a) im Hinblick auf ein und denselben Dreschwerksparameter miteinander konkurrieren, vorzugsweise, dass eine Umsetzungsvorschrift zur gleichzeitigen Umsetzung der miteinander konkurrierenden Strategien eine Mehrzieloptimierung umfasst.

14. Mähdrescher nach einem der vorhergehenden Ansprüche, **dadurch gekennzeichnet, dass** eine Umsetzungsvorschrift (11d) mindestens eine Prämisse umfasst, auf deren Basis die Rechenvorrichtung (12) bei der autonomen Ermittlung des mindestens einen Dreschwerksparameters eine Priorisierung zwischen ausgewählten Ernteprozeßstrategien (11a) und/oder zwischen Teilstrategien einer ausgewählten Ernteprozeßstrategie (11a) und/oder zwischen einzustellenden oder zu optimierenden Ernteprozessparametern und/oder zwischen vorzugebenden Dreschwerksparametern vornimmt.

15. Mähdrescher nach einem der vorhergehenden Ansprüche, **dadurch gekennzeichnet, dass** eine Prämisse darin besteht, dass die Rechenvorrichtung (12) die Einstellung oder Optimierung des Bruchkornanteils stets vorgelagert zu der Ernteprozeßstrategie der Einstellung oder Optimierung der Ausdruschverluste vornimmt.

16. Mähdrescher nach einem der vorhergehenden Ansprüche, **dadurch gekennzeichnet, dass** eine Prämisse darin besteht, dass für die Einstellung oder Optimierung der Ausdruschverluste die Vorgabe der Korbweite (1b) präferiert ist gegenüber der Vorgabe der Trommeldrehzahl (1a).

17. Mähdrescher nach einem der vorhergehenden Ansprüche, **dadurch gekennzeichnet, dass** eine Prämisse darin besteht, dass für die Einstellung oder Optimierung des Bruchkornanteils die Vorgabe die Trommeldrehzahl (1a) präferiert ist gegenüber der Vorgabe der Korbweite (1b), vorzugsweise, dass die Recheneinheit für eine Reduzierung des Bruchkornanteils eine Reduzierung der Trommeldrehzahl ansetzt.

18. Mähdrescher nach einem der vorhergehenden Ansprüche, **dadurch gekennzeichnet, dass** die Rechenvorrichtung (12) zur Umsetzung der Ernteprozeßstrategie "Balance" zwischen den Teilstrategien der Optimierung des Ernteprozeßparameters "Abscheideverluste" und der Optimierung des Ernteprozeßparameters "Ausdruschverluste" autonom die Dreschwerksparameter "Trommeldrehzahl" und "Korbweite" im oberen Drittel ihres jeweiligen Einstellbereichs ansetzt.

19. Mähdrescher nach einem der vorhergehenden Ansprüche, **dadurch gekennzeichnet, dass** die Rechenvorrichtung (12) zur Umsetzung der Ernteprozeßstrategie umfassend die Teilstrategie der Einstellung oder Optimierung des Ernteprozeßparameters "Schlupf-Dreschwerk-Antrieb" und die Teilstrategie der Einstellung und Optimierung des Ernteprozeßparameters "Bruchkornanteil" autonom den Dreschwerksparameter "Trommeldrehzahl" im mittleren Drittel und des Ernteprozeßparameters "Korbweite" im oberen Drittel ihres jeweiligen Einstellbereichs ansetzt.

## Claims

1. A combine harvester comprising a threshing mechanism (1) for threshing picked-up crop material to give grain material and a driver assist system (10) for actuation of the threshing mechanism (1), wherein the driver assist system (10) includes a memory (11) for the storage of data and a computing device (12) for processing the data stored in the memory (11),
**characterised in that** stored in the memory (11) is a functional system model (11b) for at least a part of the combine harvester, wherein the functional system model (11b) represents at least a part of the functional relationships within the combine harvester and the computing device (12) is adapted to effect in particular autonomous determination of at least one machine parameter, namely a threshing mechanism parameter (1a, 1b), based on the system model (11b), and for representing the functional relationships at least one set of characteristics (A-J) is associated with at least one harvesting process parameter and said harvesting process parameter is defined as an output value of the at least one set of characteristics (A-J), and wherein the threshing mechanism (1) together with the driver assist system (10) forms an automated threshing arrangement (14) by a plurality of selectable harvesting process strategies (11a) being stored in the memory (11) and by the computing device (12) being adapted for implementation of the respectively selected harvesting process strategy (11a) to autonomously ascertain at least one threshing mechanism parameter (1a, 1b) and preset it for the threshing mechanism (1).

2. A combine harvester according to claim 1 **characterised in that** the harvesting process state includes field crop information like "crop density", "threshability", "crop moisture content" and/or harvesting process parameters like "threshing losses", "broken grain component", "layer height", "separation losses", "cleaning losses", "threshing mechanism loading", "fuel consumption" and/or threshing mechanism parameters like "drum rotary speed", "concave width" and/or ambient information like "ambient temperature" and "ambient humidity".

3. A combine harvester according to one of the preceding claims **characterised in that** the computing device (12) generates queries concerning the current harvesting process state and outputs same by way of an input/output device (19) and that in response to a query at least a part of the harvesting process state can be input by way of the input/output device (19).

4. A combine harvester according to one of the preceding claims **characterised in that** the harvesting process parameter "layer height" and a threshing mechanism parameter, preferably the threshing mechanism parameter "drum rotary speed" or the threshing mechanism parameter "concave width" are the input values for the at least one set of characteristics (A-J).

5. A combine harvester according to one of the preceding claims **characterised in that** associated with at least one harvesting process parameter like "threshing losses", "broken grain component", "separation losses", "cleaning losses", "threshing mechanism loading" and "fuel consumption" are a first set of characteristics (A, C, E, G, I) and a second set of characteristics (B, D, F, H, J), for which said harvesting process parameter respectively forms the output value, that for the first set of characteristics (A, C, E, G, I) the further harvesting process parameter "layer height" and the threshing mechanism parameter "drum rotary speed" form the input values and for the second set of characteristics (B, D, F, H, J) the further harvesting process parameter "layer height" and the threshing mechanism parameter "concave width" form the input values.

6. A combine harvester according to one of the preceding claims **characterised in that** associated with the harvesting process parameter "threshing losses" is a set of characteristics, based on the qualitative functional relationship that threshing is correspondingly better the higher the input value layer height representing the through-put and the higher the threshing drum rotary speed and/or associated with the harvesting process parameter "threshing losses" is a set of characteristics based on the qualitative functional relationship that threshing is correspondingly better the higher the layer height representing the through-put and the lower the concave width.

7. A combine harvester according to one of the preceding claims **characterised in that** associated with the harvesting process parameter "separation losses" is a set of characteristics based on the qualitative functional relationship that with an increasing layer height representing the through-put and a falling threshing drum rotary speed the separation losses increase and/or that associated with the harvesting process parameter "separation losses" is a set of characteristics based on the qualitative functional relationship that with an increasing layer height representing the through-put and an increasing concave width the separation losses increase.

8. A combine harvester according to one of the preceding claims **characterised in that** associated with the harvesting process parameter of the "slippage threshing mechanism drive" representing the threshing mechanism loading is a set of characteristics based on the qualitative functional relationship that with an increasing layer height representing the through-put and a falling drum rotary speed the slippage in the drive train of the threshing mechanism increases and/or associated with the harvesting process parameter of the "slippage" representing the threshing mechanism loading is a set of characteristics based on the qualitative functional relationship that with an increasing layer height and a falling concave width the slippage in the drive train of the threshing mechanism increases.

9. A combine harvester according to one of the preceding claims **characterised in that** associated with the harvesting process parameter "broken grain component" is a set of characteristics based on the qualitative functional relationship that with an increasing drum rotary speed and a falling layer height the broken grain component increases and/or that associated with the harvesting process parameter "broken grain component" is a set of characteristics based on the qualitative functional relationship that with a falling layer height representing the through-put and a falling concave width the broken grain component increases.

10. A combine harvester according to one of the preceding claims **characterised in that** associated with the harvesting process parameter "cleaning losses" is a set of characteristics based on the qualitative functional relationship that with an increasing drum rotary speed and with an increasing layer height representing the through-put the cleaning losses increase and/or that associated with the harvesting process parameter "cleaning losses" is a set of characteristics based on the qualitative functional relationship that with a decreasing concave width and an increasing layer height representing the through-put the cleaning losses increase.

11. A combine harvester according to one of the preceding claims **characterised in that** the computing device (12) matches the at least one set of characteristics (A-J) in on-going harvesting operation, in particular cyclically, to the harvesting process state, preferably at least one initial set of characteristics (11c) is stored in the memory (11) and upon first ascertaining the at least one threshing mechanism parameter the computing device (12) implements the ascertaining operation based on the initial set of characteristics (11c).

12. A combine harvester according to one of the preceding claims **characterised in that** at least one selectable harvesting process strategy (11a) includes at least two sub-strategies which are respectively directed to setting or optimising a harvesting process parameter, and preferably the harvesting process strategy "balance" includes two weighted, in particular equally weighted, sub-strategies, in particular the sub-strategies of setting or optimising the harvesting process parameter "separation losses" and "threshing losses".

13. A combine harvester according to one of the preceding claims **characterised in that** stored in the memory (11) is at least one implementation specification (11d), in accordance with which the computing device (12) based on the system model (11b) effects implementation of the respectively selected harvesting process strategy (11a) by ascertaining the at least one threshing mechanism parameter, and preferably at least two selected harvesting process strategies (11a) or at least two sub-strategies of a selected harvesting process strategy (11) compete with each other in regard to one and the same threshing mechanism parameter, and preferably an implementation specification for simultaneous implementation of the mutually competing strategies includes multi-objective optimisation.

14. A combine harvester according to one of the preceding claims **characterised in that** an implementation specification (11d) includes at least one premise, on the basis of which the computing device (12) in autonomously ascertaining the at least one threshing mechanism parameter effects prioritisation as between selected harvesting process strategies (11a) and/or between sub-strategies of a selected harvesting process strategy (11a) and/or harvesting process strategies which are to be set or optimised and/or between threshing mechanism parameters which are to be predetermined.

15. A combine harvester according to one of the preceding claims **characterised in that** a premise provides that the computing device (12) effects setting or optimisation of the broken grain component always in preceding relationship with the harvesting process strategy of setting or optimising the threshing losses.

16. A combine harvester according to one of the preceding claims **characterised in that** a premise provides that predetermination of the concave width (1b) is preferred in relation to predetermination of the drum rotary speed (1a) for setting or optimising the threshing losses.

17. A combine harvester according to one of the preceding claims **characterised in that** a premise provides that predetermination of the drum rotary speed (1a) is preferred in relation to predetermination of the concave width (1b) for setting or optimisation of the broken grain component, and preferably the computing unit for a reduction in the broken grain component starts a reduction in the drum rotary speed.

18. A combine harvester according to one of the preceding claims **characterised in that** the computing device (12) for implementation of the harvesting process strategy "balance" between the sub-strategies of optimising the harvesting process parameter "separation losses" and optimising the harvesting process parameter "threshing losses" autonomously sets the threshing mechanism parameters "drum rotary speed" and "concave width" in the upper third of the respective setting range thereof.

19. A combine harvester according to one of the preceding claims **characterised in that** for implementing the harvesting process strategy including the sub-strategy of setting or optimising the harvesting process parameter "slippage threshing mechanism drive" and the sub-strategy of setting and optimising the harvesting process parameter "broken grain component" autonomously sets the threshing mechanism parameter "drum rotary speed" in the central third and the harvesting process parameter "concave width" in the upper third of the respective setting range thereof.

## Revendications

1. Moissonneuse-batteuse comprenant un système de battage (1) pour battre sous forme de produit en grains du produit de récolte ramassé et comprenant un système d'assistance à la conduite (10) pour commander le système de battage (1), le système d'assistance à la conduite (10) incluant une mémoire (11) pour enregistrer des données et un dispositif de calcul (12) pour traiter les données enregistrées dans la mémoire (11), **caractérisée en ce que** dans la mémoire (11) est enregistré un modèle de système fonctionnel (11b) pour au moins une partie de la moissonneuse-batteuse, le modèle de système fonctionnel (11b) représentant au moins une partie des relations fonctionnelles à l'intérieur de la moissonneuse-batteuse, et **en ce que** le dispositif de calcul (12) est agencé pour procéder à une détermination en particulier autonome au moins d'un paramètre machine, à savoir d'un paramètre de système de battage (1a, 1b) sur la base du modèle de système (11b), et **en ce que**, pour représenter les relations fonctionnelles, au moins un réseau de courbes caractéristiques (A-J) est associé au moins à un paramètre de processus de récolte, et **en ce que** ce paramètre de processus de récolte est défini comme grandeur de sortie du au moins un réseau de courbes caractéristiques (A-J), et le système de battage (1) formant, conjointement avec le système d'assistance à la conduite (10), un automate de battage (14), par le fait que dans la mémoire (11) est enregistrée une pluralité de stratégies de processus de récolte sélectionnables (11a) et par le fait que, pour mettre en œuvre la stratégie de processus de récolte sélectionnée respective (11a), le dispositif de calcul (12) est agencé pour déterminer de manière autonome au moins un paramètre de système de battage (1a, 1b) et pour le prescrire au système de battage (1).

2. Moissonneuse-batteuse selon la revendication 1, **caractérisée en ce que** l'état de processus de récolte inclut des informations sur la culture comme « densité de culture », « battabilité », « humidité de la culture » et/ou des paramètres de processus de récolte comme « pertes de battage », « proportion de grains cassés », « hauteur de couche », « pertes à la séparation », « pertes de nettoyage », « charge du système de battage », « consommation de carburant » et/ou des paramètres de système de battage comme « vitesse de rotation de batteur », « largeur de contre-batteur » et/ou des informations sur l'environnement comme « température ambiante », « humidité ambiante ».

3. Moissonneuse-batteuse selon une des revendications précédentes, **caractérisée en ce que**, sur demande, le dispositif de calcul (12) génère l'état de processus de récolte instantané et l'édite par l'intermédiaire d'un dispositif d'entrée/sortie (19), et **en ce que**, sur demande, au moins une partie de l'état de processus de récolte peut être entrée par l'intermédiaire du dispositif d'entrée/sortie (19).

4. Moissonneuse-batteuse selon une des revendications précédentes, **caractérisée en ce que** le paramètre de processus de récolte « hauteur de couche » et un paramètre de système de battage, de préférence le paramètre de système de battage « vitesse de rotation de batteur » ou le paramètre de système de battage « largeur de contre-batteur », sont les grandeurs d'entrée pour le au moins un réseau de courbes caractéristiques (A-J).

5. Moissonneuse-batteuse selon une des revendications précédentes, **caractérisée en ce qu'**à au moins un paramètre de processus de récolte comme « pertes de battage », « proportion de grains cassés », « pertes à la séparation », « pertes de nettoyage », « charge du système de battage », « consommation de carburant » sont associés un premier réseau de courbes caractéristiques (A,C,E,G,I) et un second réseau de courbes caractéristiques (B,D,F,H,J), pour lesquels ce paramètre de processus de récolte forme respectivement la grandeur de sortie, **en ce que** pour le premier réseau de courbes caractéristiques (A,C,E,G,I) le paramètre de processus de récolte supplémentaire « hauteur de couche » et le paramètre de système de battage « vitesse de rotation de batteur » forment les grandeurs d'entrée, et **en ce que** pour le second réseau de courbes caractéristiques (B,D,F,H,J) le paramètre de processus de récolte supplémentaire « hauteur de couche » et le paramètre de système de battage « largeur de contre-batteur » forment les grandeurs d'entrée.

6. Moissonneuse-batteuse selon une des revendications précédentes, **caractérisée en ce qu'**au paramètre de processus de récolte « pertes de battage » est associé un réseau de courbes caractéristiques sur la base de la relation fonctionnelle qualitative, **en ce que** le battage est d'autant meilleur que la grandeur d'entrée « hauteur de couche » représentant le débit est élevée et que la vitesse de rotation de batteur est élevée et/ou, **en ce qu'**au paramètre de processus de récolte « pertes de battage » est associé un réseau de courbes caractéristiques sur la base de la relation fonctionnelle qualitative, **en ce que** la battage est d'autant meilleur que la hauteur de couche représentant le débit est élevée et que la largeur de contre-batteur est réduite.

7. Moissonneuse-batteuse selon une des revendications précédentes, **caractérisée en ce qu'**au paramètre de processus de récolte « pertes à la séparation » est associé un réseau de courbes caractéristiques sur la base de la relation fonctionnelle qualitative, **en ce qu'**avec une hauteur de couche croissante, représentant le débit, et avec une vitesse de rotation de batteur décroissante les pertes à la séparation augmentent, et/ou, **en ce qu'**au paramètre de processus de récolte « pertes à la séparation » est associé un réseau de courbes caractéristiques sur la base de la relation fonctionnelle qualitative, **en ce qu'**avec une hauteur de couche croissante, représentant le débit, et une largeur de contre-batteur croissante, les pertes à la séparation augmentent.

8. Moissonneuse-batteuse selon une des revendications précédentes, **caractérisée en ce qu'**au paramètre de processus de récolte « entraînement de système de battage glissant » représentant la charge du système de battage est associé un réseau de courbes caractéristiques sur la base de la relation fonctionnelle qualitative, **en ce qu'**avec une hauteur de couche croissante, représentant le débit, et une vitesse de rotation de batteur décroissante, le patinage dans la chaîne de transmission du système de battage augmente, et/ou **en ce qu'**au paramètre de processus de récolte du « patinage » représentant la charge du système de battage est associé un réseau de courbes caractéristiques sur la base de la relation fonctionnelle qualitative, **en ce qu'**avec une hauteur de couche croissante et une largeur de contre-batteur décroissante, le patinage dans la chaîne de transmission du système de battage augmente.

9. Moissonneuse-batteuse selon une des revendications précédentes, **caractérisée en ce qu'**au paramètre de processus de récolte « proportion de grains cassés » est associé un réseau de courbes caractéristiques sur la base de la relation fonctionnelle qualitative, **en ce qu'**avec une vitesse de rotation de batteur croissante et une hauteur de couche décroissante, la proportion de grains cassés augmente, et/ou, **en ce qu'**au paramètre de processus de récolte « proportion de grains cassés » est associé un réseau de courbes caractéristiques sur la base de la relation fonctionnelle qualitative, **en ce qu'**avec une hauteur de couche décroissante, représentant le débit, et une largeur de contre-batteur décroissante, la proportion de grains cassés augmente.

10. Moissonneuse-batteuse selon une des revendications précédentes, **caractérisée en ce qu'**au paramètre de processus de récolte « pertes de nettoyage » est associé un réseau de courbes caractéristiques sur la base de la relation fonctionnelle qualitative, **en ce qu'**avec une vitesse de rotation de batteur croissante et une hauteur de couche croissante, représentant le débit, les pertes de nettoyage augmentent, et/ou **en ce qu'**au paramètre de processus de récolte « pertes de nettoyage » est associé un réseau de courbes caractéristiques sur la base de la relation fonctionnelle qualitative, **en ce qu'**avec une largeur de contre-batteur décroissante et une hauteur de couche croissante, représentant le débit, les pertes de nettoyage augmentent.

11. Moissonneuse-batteuse selon une des revendications précédentes, **caractérisée en ce que** le dispositif de calcul (12) aligne le au moins un réseau de courbes caractéristiques (A-J) en cours de récolte, en particulier cycliquement, sur l'état de processus de récolte, de préférence **en ce que** dans la mémoire (11) est enregistré au moins un réseau de courbes caractéristiques initial (11c), et **en ce que** lors de la première détermination du au moins un paramètre de système de battage, le dispositif de calcul (12) procède à la détermination sur la base du réseau de courbes caractéristiques initial (11c).

12. Moissonneuse-batteuse selon une des revendications précédentes, **caractérisée en ce qu'**au moins une stratégie de processus de récolte sélectionnable (11a) inclut au moins deux stratégies partielles qui visent respectivement à régler ou à optimiser un paramètre de processus de récolte, de préférence **en ce que** la stratégie de processus de récolte « équilibre » inclut deux stratégies partielles pondérées, en particulier équilibrées, en particulier les stratégies partielles du réglage et de l'optimisation des paramètres de processus de récolte « pertes à la séparation » et « pertes de battage ».

13. Moissonneuse-batteuse selon une des revendications précédentes, **caractérisée en ce que** dans la mémoire (11) est enregistrée au moins une consigne de mise en œuvre (11d) selon laquelle le dispositif de calcul (12) effectue la mise en œuvre de la stratégie de processus de récolte sélectionnée respective (11a) sur la base du modèle de système (11d) en déterminant le au moins un paramètre de système de battage, de préférence **en ce qu'**au moins deux stratégies de processus de récolte sélectionnées (11a) ou au moins deux stratégies partielles d'une stratégie de processus de récolte sélectionnée (11a) sont en concurrence mutuelle dans la perspective d'un seul et même paramètre de système de battage, de préférence **en ce qu'**une consigne de mise en œuvre pour la mise en œuvre simultanée des stratégies concurrentes inclut une optimisation multiobjectif.

14. Moissonneuse-batteuse selon une des revendications précédentes, **caractérisée en ce qu'**une consigne de mise en œuvre (11d) inclut au moins une prémisse sur la base de laquelle le dispositif de calcul (12), lors de la détermination autonome du au moins un paramètre de système de battage, effectue une priorisation entre des stratégies de processus de récolte sélectionnées (11a) et/ou entre des stratégies partielles d'une stratégie de processus de récolte sélectionnée (11a) et/ou entre des paramètres de processus de récolte à régler ou à optimiser et/ou entre des paramètres de système de battage à prescrire.

15. Moissonneuse-batteuse selon une des revendications précédentes, **caractérisée en ce qu'**une prémisse consiste **en ce que** le dispositif de calcul effectue toujours le réglage ou l'optimisation de la proportion de grains cassés préalablement à la stratégie de processus de récolte du réglage ou de l'optimisation des pertes de battage.

16. Moissonneuse-batteuse selon une des revendications précédentes, **caractérisée en ce qu'**une prémisse consiste **en ce que**, pour le réglage ou l'optimisation des pertes de battage, la prescription de la largeur de contre-batteur (1b) est préférée à la prescription de la vitesse de rotation de batteur (1a).

17. Moissonneuse-batteuse selon une des revendications précédentes, **caractérisée en ce qu'**une prémisse consiste **en ce que**, pour le réglage ou l'optimisation de la proportion de grains cassés, la prescription de la vitesse de rotation de batteur (1a) est préférée à la prescription de la largeur de contre-batteur (1b), de préférence **en ce que** l'unité de calcul conditionne une réduction de la proportion de grains cassés à une réduction de la vitesse de rotation de batteur.

18. Moissonneuse-batteuse selon une des revendications précédentes, **caractérisée en ce que**, pour mettre en œuvre la stratégie de processus de récolte « équilibre » entre les stratégies partielles d'optimisation du paramètre de processus de récolte « pertes à la séparation » et d'optimisation du paramètre de processus de récolte « pertes de battage », le dispositif de calcul (12) fixe de manière autonome les paramètres de système de battage « vitesse de rotation de batteur » et « largeur de contre-batteur » dans le tiers supérieur de leur plage de réglage respective.

19. Moissonneuse-batteuse selon une des revendications précédentes, **caractérisée en ce que**, pour mettre en œuvre la stratégie de processus de récolte incluant la stratégie partielle de réglage ou d'optimisation du paramètre de processus de récolte « entraînement de système de battage glissant » et la stratégie partielle de réglage ou d'optimisation du paramètre de processus de récolte « proportion de grains cassés », le dispositif de calcul (12) fixe de manière autonome le paramètre de système de battage « vitesse de rotation de batteur » dans le tiers médian et le paramètre de processus de récolte « largeur de contre-batteur » dans le tiers supérieur de leur plage de réglage respective.
